(19) Europäisches Patentamt

European Patent Office

Office européen des brevets

(11) Publication number: **0 439 867 B1**

## (12) EUROPEAN PATENT SPECIFICATION

(45) Date of publication of patent specification: **08.06.94**  (51) Int. Cl.5: **H01S 3/06**

(21) Application number: **90203494.1**

(22) Date of filing: **24.12.90**

(54) **Optical power amplifier with doped active fibre.**

(30) Priority: **22.01.90 IT 1912890**

(43) Date of publication of application:
**07.08.91 Bulletin 91/32**

(45) Publication of the grant of the patent:
**08.06.94 Bulletin 94/23**

(84) Designated Contracting States:
**AT BE CH DE DK ES FR GB IT LI LU NL SE**

(56) References cited:
**EP-A- 0 143 561**
**EP-A- 0 345 957**

**IEEE PHOTONICS TECHNOLOGY LETTERS, vol. 1, no. 9, September 1989, pages 267-269, IEEE, New York, US; P.C. BECKER et al.: "High-gain and high-efficiency diode laser pumped fiber amplifier at 1.56 mum"**

**OPTICS LETTERS, vol. 14, no. 18, 15th September 1989, pages 1002-1004, Optical Society of America; W.L. BARNES et al.: "High-quantum-efficiency Er3+ fiber laser pumped at 980 nm"**

(73) Proprietor: **PIRELLI CAVI S.p.A.**
**Piazzale Cadorna, 5**
**I-20123 Milano(IT)**

(72) Inventor: **Grasso, Giorgio**
**Via Canesi, 8**
**I-20052 Monza (Milano)(IT)**
Inventor: **Righetti, Aldo**
**Via Tolstoi, 49**
**I-20146 Milano(IT)**
Inventor: **Meli, Fausto**
**Via A. Genocchi, 76**
**I-29100 Piacenza(IT)**

(74) Representative: **Marchi, Massimo et al**
**c/o Marchi & Mittler s.r.l.**
**Viale Lombardia 20**
**I-20131 Milano (IT)**

## Description

The present invention relates to an optical power amplifier with active fibre, with high amplification efficiency.

For long distance signal transmission through a telecommunication line with optical fibre it is necessary that the same signals reach the receiving station with a sufficient level to allow the recognition and use; as in the propagation in an optical fibre there is an attenuation of the signal light, to obtain at the receiving station, tens or hundreds kilometres far, a signal of sufficient level, the signal originally introduced in the fibre must have the highest possible level.

The lasers used for the generation of the transmission signal however have somewhat limited power, not more than some mW, while more powerful lasers are not able to generate such signals; thus we have the exigency to use power amplifiers, to receive the signal generated by the laser and to amplify it up to the desired level.

It is known that optical fibres having core doped with particular substances, e.g. rare earth ions, present stimulated output characteristics suitable to be used as optical amplifiers.

Such fibres in fact can be supplied with a light source, called "pumping source", at a particular wavelength, in correspondence to a peak of the absorption spectrum of the doping substance, which is able to bring the atoms of the doping substance in one excited energetic condition, or pumping band, from which the same atoms lapse spontaneously in very short time to a laser output condition, where they remain for a relatively longer time.

When a fibre having a high number of atoms at the excited state in the emission level is crossed by a signal light having a wavelength corresponding to such laser emission state, the signal causes the transition of the excited atoms to a lower level, with light emission having the same wavelength of the signal; therefore a fibre of such kind can be used to obtain an amplification of an optical signal.

In particular optical amplifiers using Erbium as laser-emission dopant are well known, which make use the fluorescence of the Erbium around 1550 nm for the amplification of a signal in such range, in which there are the best transmissive characteristics of the line fibre by the point of view of the attenuation of the signal.

Power optical amplifiers using fibres doped with Erbium have been described in "Proceeding ECOC (European Conference on Optical Communication) 1989", pages 42-43; such document describes a power amplifier that uses fibres of silica doped with Germanium and Erbium, pumped with a laser Nd - YAG doubled in frequency to 532 nm.

Such amplifier however presents a very low amplification efficiency (intended as ratio between the power of the transmission signal in output with respect to the supplied pumping power) lower than 20%, very far from the maximum theoretic efficiency.

From British patent application N. 8813769 fibres of the type Al/Er are known, in which the dopant used to obtain the index refraction profile suitable to guide the light is $Al_2O_3$; the fibres are suitable for optical amplifiers pumped at 514.5 nm wavelength, e.g. with an Argon laser .

According to said patent application, the Al/Er fibres result preferable to the traditional Ge/Er fibres if pumped at the indicated wave length of 514.5 nm, because they avoid absorption phenomenons in the excited state that occur in the Ge/Er fibres at such wavelength.

The OPTICS LETTERS, vol. 14, n.18, 15th September 1989, pages 1002-1004 report discloses an erbium doped silica fibre laser containing $Al_2O_3$ and $P_2O_5$ pumped at 980 nm wavelength rather than a fibre amplifier. However, a laser is a device operating in a very different way than that of an optical amplifier.

The IEEE PHOTONICS LETTERS, vol.1, n.9, September 1989, pages 267-269, report discloses an optical fibre amplifier comprising an optical fibre doped with erbium, alumina ($Al_2O_3$) and germanium oxide ($GeO_2$), pumped by a laser diode at 1,480-1,490 nm. Said amplifier shows an efficiency of 0.66 dB/mW (i.e. 66%) at 1,480 nm pumping wavelength, with a 1,560 nm wavelength signal. Such value is far from its maximum theoretical efficiency, i.e. the "quantum efficiency", which is $\lambda p/\lambda s = 1,480/1,560 = 0.95$ (i.e. 95%).

In order to obtain a high amplification efficiency, on the other hand, it is convenient to use relatively high pumping wavelengths, in particular the wavelength of 980 nm is useful, because the amplification efficiency in a power amplifier is substantially proportional to the pumping wavelength.

Therefore, the object of the present invention is to provide a power amplifier that has a high amplification efficiency in correspondence with relatively high pumping wavelengths, substantially more than 520 nm.

The present invention relates to optical power amplifier as defined by the characterising portion of claim 1.

The Erbium concentration in the fibre, expressed as weight of $Er_2O_3$ is comprised between 30 and 2000 ppm and preferably between 30 and 1000 ppm.

The active fibre can be monomodal at the wavelength of the transmission signal but not at the pumping wavelength, in order to have a high pumping power inside the entire section of the same fibre.

Alternately the active fibre can be monomodal at the wavelength of the transmission signal and at the pumping wavelength in order to reduce the connection losses with the dichroic coupler

In a preferred embodiment the optical power amplifier according to the invention includes two pumping lasers connected to the two ends of the active fibre through respective dichroic couplers, orientated with input direction of the power light emitted by the pumping laser directed toward the same active fibre.

More details can be appreciated with the following description of the invention, with reference to the accompanying drawings, in which:

Figure 1 shows a diagram of an optical telecommunication line with power amplifier;

Figure 2 shows a diagram of an optical power amplifier using an active fibre;

Figure 3 shows a diagram of the energetic transitions of a fibre for an amplifier according to the diagram of Figure 2, suitable to generate a stimulated (laser) output;

Figure 4 shows a diagram of the output power with respect to the pumping power in a power amplifier using an active fibre according to the invention;

Figure 5 shows a diagram of the output power versus the pumping power in a power amplifier using a Ge/Er type active fiber;

Figure 6 shows the fluorescence spectrum of a fiber according to the invention and of a Ge/Er fiber.

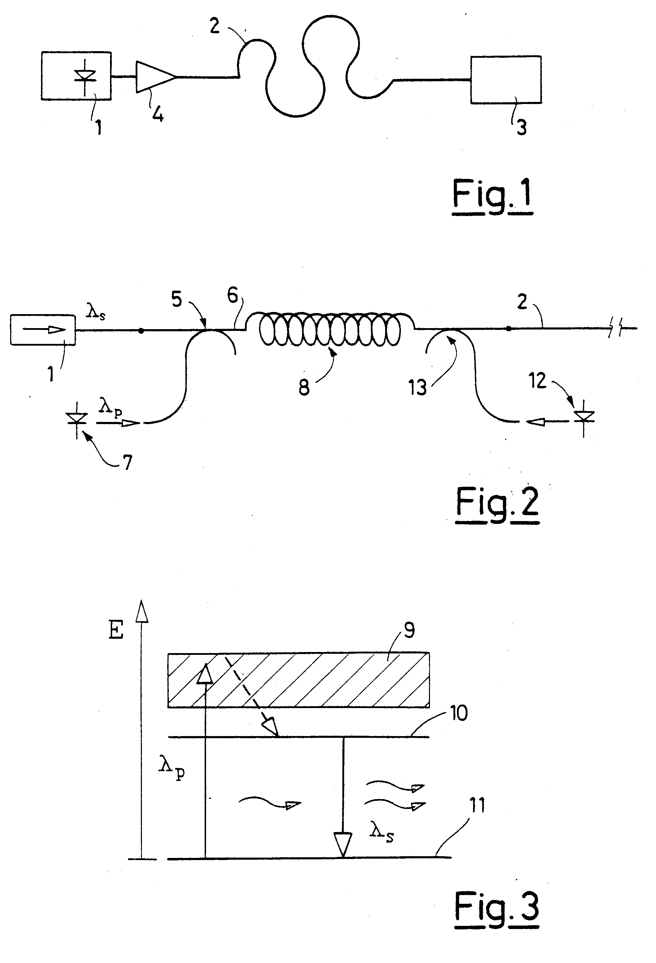

A telecommunication line with optical fibres, schematically represented in Figure 1, in general comprises a station 1 for the emission of transmission signals, an optical fiber line 2, suitable to carry to long distance the signals in it imputed, and a receiving station 3 to which the signals arrive.

In order to introduce in the optical fibres telecommunication line 2 optical signals which have an initial power level high enough to allow them to reach the receiving station 3 placed tens or hundreds kilometres far from the source 1, having an acceptable power level for the sensibility of the receiving apparatuses located therein, notwithstanding the inevitable attenuation due to the long path inside the fiber, the optical signals, that are generated by a laser emitter present in the emission station 1, are conveniently amplified by means of a power amplifier 4.

In fact the usable laser for the generation of the transmission signals, operating at the wavelength in which the transmissive characteristics of the fiber are the best, that is in correspondence to the so called third window, around 1500 - 1600 nm, are semiconductor lasers, modulable and with good spectral performance, but such lasers have an output signal level somewhat low, not exceeding about 3 dBm (about 5 mW); for this reason the signal they generate should conveniently be amplified to a higher level, e.g. up to 15 - 20 dBm, before its introduction in the line.

To realise an optical amplification of signals, to be introduced in a line with optical fibres for telecommunications, power amplifiers with optical fibres are used.

The structure of an amplifier with optical fiber is schematically illustrated in Figure 2 ; a transmission signal, having wavelength $\lambda_s$, is dispatched to a dichroic coupler 5, where it is joined on a unique outgoing fiber 6 with a pumping signal with wavelength $\lambda_p$, generated by a pumping laser 7; an active fiber 8 of convenient length, connected to the fiber 6 outgoing the coupler, constitutes the amplifier of the signal, that is so introduced on the line fiber 2 to be dispatched toward its destination.

In general an optical amplifier of the described type provides the use of an optical active fiber 8 in doped silica in solution with $Er_2O_3$, that consents to obtain an amplification of the transmission signal, exploiting the stimulated transitions of the Erbium.

As shown in the diagram of Figure 3, representing in symbolic way the available energetic condition for one Erbium ion in solution in the siliceous matrix of the fiber, the introduction into the active fiber of a light power at the pumping wavelength $\lambda_p$, lower than that $\lambda_s$ of the transmission signal, introduces a certain number of ions $Er^{3+}$ present as doping substance in the fiber glass matrix at an excited energetic state 9, or "pumping" band, from which the ions lapse spontaneously to an energetic level 10, constituting a laser emission level.

In the output laser level 10 the $Er^{3+}$ ions can remain for a relatively long time before undergoing a spontaneous transition to the basis level 11.

As it is known, while the transition from the band 9 to the level 10 is associated to a thermal output, that is dispersed to the exterior of the fiber (phononic radiation), the transition from the level 10 to the basis level 11 generates a light emission, consisting of a photon with wavelength corresponding to the energetic value of the laser emission level 10; if a fiber containing a high quantity of ions at the laser emission level is crossed by a signal with wavelength corresponding to such emission level, the signal causes the stimulated transition of the interested ions from the emission level to the basis level, before their spontaneous decaying, associated with a corresponding output of photons in phase with the photons of the signal, giving origin to a "waterfall" phenomenon that produces at the output from the active fiber the emission of a strongly amplified transmission signal.

In the presence of signals in input to the active fiber with a low power level, for example a signal that have been attenuated after having reached a long distance inside an optical fiber, and in conditions of low output powers, the light power $P_u$ of the transmission signal with wavelength $\lambda_s$ in output from the active fiber is proportional to the power $P_i$ of the same signal in input in the fiber and the constant of proportionality between them is defined as gain of amplification G, according to the relation $P_u = G\, P_i$.

Such operating conditions are typical of line amplifiers placed along an optical fiber of a telecommunication line, to restore to a sufficient level a signal attenuated after a certain path in the fiber.

In presence of a high power input signal and with high output power, substantially more then 5% of the pumping power introduced, the optical amplifier operates in saturation conditions and yields an output power that practically does not depend any more from the input power, but solely from the pumping power; in presence of a great number of photons inside the active fiber, in fact, the capacity of the fiber to emit new photons due to stimulated transitions by the level laser 10 is limited by the possibility, correlated to the pumping power introduced, to make available a sufficient number of Erbium ions in the laser level 10 and it does not depend from the number of photons of input signal, that is from the input power into the fiber.

Such operating conditions are typical of the power amplifiers and for them we have a relation $P_u = K\, P_p$, where $P_u$ is the power in output, $P_p$ the pumping power and K a proportionality constant that represents, in substance, the efficiency of the amplifier.

The maximum efficiency of the amplifier is theoretically the efficiency corresponding to the situation in which, for each photon supplied inside the fiber at the pumping wavelength $\lambda_p$, that causes a transition of the dopant from the basis level 11 to the laser level 10, there is a photon emission, in presence of signal, at the transmission wavelength $\lambda_s$; such conditions correspond to an amplification efficiency said "Quantum Efficiency", to say an efficiency that is the ratio between the energy of the photon in output and the energy of the photon in input, or, in definitive, between the wavelength of the input photon, that is the pumping photon, and the wavelength of the output photon, that is the transmission photon : $E_q = \lambda_p/\lambda_s$.

In the case of wavelength of the transmission signal of about 1550 nm and of pumping wavelength of 980 nm the quantum efficiency is about 63% (980/1550).

In order to obtain a high amplification efficiency therefore it is necessary to operate in corresponding conditions, with high quantum efficiency, using pumping wavelengths relatively high and furthermore to approach as much as possible the quantum efficiency.

In particular the use of low pumping wavelengths, substantially lower than 520 nm, gives a very low quantum efficiency (lower than 33%) and a very poor amplification efficiency even, in the better of the cases, using amplifiers having efficiency equal to the quantum efficiency.

For the realisation of power amplifier of the type above described, we have discovered that active silica fibres, doped with $Al_2O_3$ to obtain the desired index refraction profile, containing Erbium as dopant with laser emission, present a very high efficiency, next to the quantum efficiency above described, in correspondence with pumping wavelength higher than 520 nm, and in particular in correspondence to the absorption peak of the Erbium at 980 nm.

The above described fibres are obtained with the technique of solution doping, well known in the art, through which the principal dopant, that is $Al_2O_3$, and the fluorescent dopant, that is $Er^{3+}$, are incorporated in the core of the fiber by immersion in an aqueous solution, corresponding containing salts, a tubular preform having one internal sintered layer, that is then fused and collapsed, drawing the fiber from it.

The description of such kind of fibres and of the relative realisation method is disclosed in British patent application N. 8813769.

For the realisation of power amplifiers, according to the present invention, the fibres doped with $Al_2O_3$ contain an Erbium quantity, expressed as concentration in weight of $Er_2O_3$, between 30 ppm and 2000 ppm and preferably between 30 and 1000 ppm; the content of the refraction index modifying dopant, that is $Al_2O_3$, and the radial profile of the refraction index in the fiber can be chosen in basis of the specific exigencies of the application and are not conditioning to the purposes of the present invention.

In particular the numerical aperture and the mode diameter of the fiber are opportunely chosen in such a way to consent a coupling with low loss with the line fiber, while the Erbium content and its radial distribution in the fiber can be chosen in correlation with the length of the chosen active fiber, the input power and the like, according to known criteria.

The active fiber is a fiber monomodal at the transmission wavelength; it can be not monomodal at the pumping wavelength, to the purpose to consent the input in the fiber of the greater possible quantity of pumping power, distributed in the entire section; the use of a fiber monomodal at the pumping wavelength $\lambda_p$ can be however convenient to simplify and to reduce the connection losses of the fiber with the dichroic coupler 5.

With such fibres it is possible to produced a power amplifier according to the scheme illustrated in Figure 2 and in the previous description; to the purpose to maintain a high value of the pumping power for the entire length of the active fiber 8 and to increase the total pumping power introduced in the fiber it is conveniently possible to provide a second pumping laser 12 downwards of the active fiber, with a relative dichroic coupler 13 oriented toward the same fiber.

This allows, in particular, to use the pumping laser at a not too high power, in order to do not get relevant degradation of the signal, while supplying all the necessary power to the active fiber.

The use of a fiber doped with $Al_2O_3$ and $Er^{3+}$, pumped at 980 nm (±5 nm), has enabled to obtain a very high amplification efficiency, next to the above cited quantum efficiency, and however higher than 60% of such value; the traditional fibres doped with Germanium have shown instead a very low efficiency, lower than 30% of the quantum efficiency.

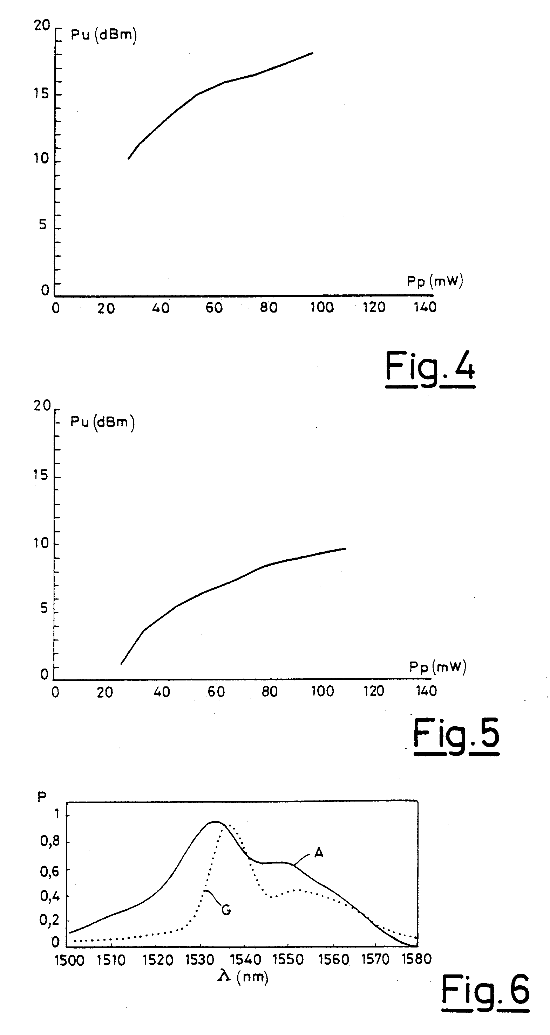

Figure 4 shows a diagram of the output power $P_u$ in function of the pumping power $P_p$ for an amplifier realised with the use of a fiber according to the invention (Al/Er); the fiber had the following characteristics:
Numerical Aperture 0.16
Erbium content (weight of $Er_2O_3$ ) 350 ppm
Cut-off wavelength ($\lambda_{cut-off}$) 930 nm
Mode Field Diameter (MFD) at 1536 nm 8.14 $\mu m$
In the amplifier input the power of the transmission signal, having a wavelength $\lambda_s$ = 1536 nm, was $P_i$ = -2 dBm; the pump wavelength was $\lambda_p$ = 980 nm and the active fiber had length of 3.7 m.
In such conditions we have obtained an amplification efficiency substantially equal to the quantum efficiency.

In comparison Figure 5 shows the diagram of the output power $P_u$ versus the pumping power $P_p$ for an amplifier realised using a traditional fiber (Ge/Er); the fiber had the following characteristics:
Numerical Aperture 0.21
Erbium content (weight of $Er_2O_3$) 300 ppm
Cut-off wavelength ($\lambda_{cut-off}$) 980 nm
Mode Field Diameter (MFD) at 1536 nm 5.82 $\mu m$
In the amplifier input the power of the transmission signal, having a wavelength $\lambda_s$ = 1536 nm, was $P_i$ = 0 dBm; the pump wavelength was $\lambda_p$ = 980 nm and the active fiber had length of 4 m.

The obtained amplification efficiency had been, in this case, of 16%, about equal to 25% of the quantum efficiency.

As appears also by comparing the diagrams, the fiber Al/Er has shown a better performance than the fiber Ge/Er.

A fiber Al/Er presents a fluorescence spectrum broader than the one of a corresponding fiber Ge/Er, as appears by the respective curves A and G of Figure 6; this makes such active fibres source of greater noise if compared to the fibres Ge/Er, due to the spontaneous decay of the Erbium ions with wave different lengths from the signal lengths, in the case of their use as line amplifiers, to say to low exit power if compared to the pumping power.

For the use as power amplifiers we have instead observed that the fibres Al/Er do not present significant noise output if compared to the fibres Ge/Er; we consider that this is due to the fact that in the saturation condition as previously described, in which a power amplifier operates, in the fibres Al/Er substantially all Erbium ions brought to the lasing level are made to decay to the basis level by a photon of the signal, as confirms the amplification efficiency close to the quantum efficiency shown by such fibres, and thus practically no ion underlies spontaneous decaying, noise cause, that furthermore results negligible in any case given the level of the output power of the signal.

The widening of the fluorescence spectrum of the fiber has furthermore the advantage to consent a greater selection liberty in the wave transmission length, allowing for example to accept a more wide productive tolerance in the signal laser.

The fibres according to the invention thus have revealed to be particularly advantageous for the use in optical amplifiers with power fiber, offering an amplification efficiency sensitively higher than the known fibres.

Multifarious variants can be introduced, without going beyond the scope of the present invention in its general characteristics.

**Claims**

1. An optical power amplifier (4) comprising an active doped fibre (8) containing $Al_2O_3$ as refractive index modifying dopant and Erbium as fluorescent dopant in the core, supplied with pump light from one or two pumping lasers (7, 12) through a dichroic coupler (5, 13) and connecting a transmission signals emitter (1) to an optical fibre telecommunication line (2), characterised in that said emitter (1) provides a high power input signal to the fibre (8) such that the amplifier (4) operates in saturation conditions for the stimulated output of said fluorescent doping material and said pumping lasers (7, 12) exibit a pumping wavelength of 980 nm.

2. An optical power amplifier according to claim 1, characterised in that the Erbium concentration in said fiber expressed in weight of $Er_2O_3$,

is included between 30 and 2000 ppm.

3. An optical power amplifier according to claim 2, characterised in that the Erbium concentration in the fiber, expressed in weigh of $Er_2O_3$, is included between 30 and 1000 ppm.

4. An optical power amplifier according to claim 1, characterised in that the active fiber (8) is monomodal at the wavelength of the transmission signal but not at the pump wavelength.

5. An optical power amplifier according to claim 1, characterised in that the active fiber (8) is monomodal at the wavelength of the transmission signal and at the pump wavelength.

6. An optical power amplifier according to claim 1, characterised in that it includes two pumping lasers (7, 12) connected to the two ends of the active fiber (8) through respective dichroic couplers (5, 13), orientated with input direction of the light power emitted by the pump laser (7, 12) directed toward the active fiber (8).

**Patentansprüche**

1. Optischer Leistungsverstärker (4) mit einer dotierten, $Al_2O_3$ als den Brechungsindex modifizierendes Dotiermittel und Erbium als fluoreszierendes Dotiermittel in dem Kern enthaltenden, aktiven Faser (8), der mit Pumplicht aus einem oder zwei Pumplasern (7, 12) über eine dichroitische Koppelung (5, 13) versorgt wird und der einen Sender (1) für Übertragungssignale mit einer Faseroptik-Telekommunikationsleitung (2) verbindet, dadurch gekennzeichnet, daß der Sender (1) für die Faser (8) ein solches Hochleistungseingangssignal bereitstellt, daß der Verstärker (4) in Sättigungszuständen für das stimulierte Ausgangssignal des fluoreszierenden Dotiermaterials arbeitet und die Pumplaser (7, 12) eine Pumpwellenlänge von 980 nm haben.

2. Optischer Leistungsverstärker nach Anspruch 1, dadurch gekennzeichnet, daß die Erbiumkonzentration in der Faser ausgedrückt in Gewicht von $Er_2O_3$ zwischen 30 und 2000 ppm liegt.

3. Optischer Leistungsverstärker nach Anspruch 2, dadurch gekennzeichnet, daß die Erbiumkonzentration in der Faser ausgedrückt in Gewicht von $Er_2O_3$ zwischen 30 und 1000 ppm liegt.

4. Optischer Leistungsverstärker nach Anspruch 1, dadurch gekennzeichnet, daß die aktive Faser (8) bei der Wellenlänge des Übertragungssignals, nicht jedoch bei der Pumpwellenlänge monomodal ist.

5. Optischer Leistungsverstärker nach Anspruch 1, dadurch gekennzeichnet, daß die aktive Faser (8) bei der Wellenlänge des Übertragungssignals und bei der Pumpwellenlänge monomodal ist.

6. Optischer Leistungsverstärker nach Anspruch 1, dadurch gekennzeichnet, daß er zwei Pumplaser (7, 12) hat, die mit den beiden Enden der aktiven Faser (8) jeweils über dichroitische Koppelungen (5, 13) verbunden sind, die zu der Eingangsrichtung der Lichtleistung ausgerichtet sind, die von dem Pumplaser (7, 12) emittiert wird, der zu der aktiven Faser (8) gerichtet ist.

**Revendications**

1. Un amplificateur optique (4) de puissance, comprenant une fibre active dopée (8) contenant du $Al_2O_3$ comme dopant modifiant l'indice de réfraction et de l'erbium comme dopant fluorescent dans le noyau, alimenté en lumière de pompe à partir d'un ou deux lasers de pompage (7, 12) à travers un coupleur dichroïque (5, 13), et reliant un émetteur (1) de signaux d'émission à une ligne de télécommunications (2) à fibres optiques, caractérisé en ce que ledit émetteur (1) envoie un signal d'entrée de haute puissance à la fibre (8) de sorte que l'amplificateur (4) fonctionne dans des conditions de saturation pour la sortie stimulée de ladite matière dopante fluorescente et lesdits lasers de pompage (7, 12) présentent une longueur d'onde de pompage de 980 nm.

2. Un amplificateur optique de puissance selon la revendication 1, caractérisé en ce que la concentration en erbium dans ladite fibre, exprimée en poids de $Er_2O_3$, est comprise entre 30 et 2000 ppm.

3. Un amplificateur optique de puissance selon la revendication 2, caractérisé en ce que la concentration en erbium dans la fibre, exprimée en poids de $Er_2O_3$, est comprise entre 30 et 1000 ppm.

4. Un amplificateur optique de puissance selon la revendication 1, caractérisé en ce que la fibre active (8) est monomode à la longueur d'onde du signal d'émission mais non à la longueur d'onde de pompe.

5. Un amplificateur optique de puissance selon la revendication 1, caractérisé en ce que la fibre active (8) est monomode à la longueur d'onde du signal d'émission et à la longueur d'onde de pompe.

6. Un amplificateur optique de puissance selon la revendication 1, caractérisé en ce qu'il inclut deux lasers de pompage (7, 12) reliés aux deux extrémités de la fibre active (8) par des coupleurs dichroïques respectifs (5, 13) orientés selon la direction d'entrée de la puissance lumineuse par le laser de pompe (7,12) dirigé vers la fibre active (8).

Fig.1

Fig.2

Fig.3

Fig.4

Fig.5

Fig.6